# EUROPÄISCHE PATENTSCHRIFT

(11) **EP 1 841 607 B1**
(45) Veröffentlichungstag und Bekanntmachung des Hinweises auf die Patenterteilung: **12.08.2009**
(21) Anmeldenummer: 05798804.0
(22) Anmeldetag: 28.10.2005
(51) Int. Cl.: B60D 1/62

(54) **KUPPLUNGSVORRICHTUNG ZUR VERBINDUNG EINER ZUGMASCHINE MIT EINEM ANHÄNGERFAHRZEUG**
COUPLING DEVICE FOR CONNECTING A TRACTOR MACHINE TO A TRAILER VEHICLE
DISPOSITIF D'ACCOUPLEMENT POUR RELIER UN TRACTEUR ET UNE REMORQUE

(30) Priorität: 29.01.2005 DE 202005001425 U
(43) Veröffentlichungstag der Anmeldung: 10.10.2007
(73) Patentinhaber: Georg Fischer Verkehrstechnik GmbH, 78221 Singen (DE)
(72) Erfinder: GLAESER, Joachim, 20457 Hamburg (DE); METTERNICH, Heinz-Rüdiger, 21079 Hamburg (DE)
(74) Vertreter: Bauer, Clemens
(86) Internationale Anmeldenummer: PCT/EP2005/011548
(87) Internationale Veröffentlichungsnummer: WO 2006/079370

(56) Entgegenhaltungen:
- WO-A-89/02374
- DE-A1- 3 726 822
- GB-A- 596 090
- US-A- 2 457 478

## Beschreibung

Die Erfindung bezieht sich auf eine Kupplungsvorrichtung zum Ankuppeln eines Anhängerfahrzeuges an eine Zugmaschine, aufweisend an der Zugmaschine einen Kuppelkörper mit Maulöffnung und pneumatisch betätigbarem Kuppelbolzen und am Anhänger eine Deichsel mit Zugöse für den Durchgang des Kuppelbolzens.

Es sind so genannte automatische Anhängerkupplungen bekannt, bei welchen die Öse der Deichsel in die Maulöffnung des Kuppelkörpers gebracht und sodann pneumatisch der Kuppelbolzen betätigt wird, so dass er im angekuppelten Zustand sich im Inneren der Öse der Deichsel des Anhängers befindet. Bei einer solchen Kupplung müssen jedoch elektrische und pneumatische Verbindungen von Hand hergestellt werden, damit z. B. die Brems- und Fahrzeugrichtungsanzeigen kontrolliert ausgeführt und die Bremsen betätigt werden können.

Es ist eine Kupplung der eingangs genannten Art vorgeschlagen worden (PCT/EP2004/009386 sowie DE3726822), bei der es nicht mehr ertorderlich ist, dass von Hand irgendwelche Verbindungsvorgänge durchgeführt werden müssen, und zwar sowohl, wenn ein Anhänger angekuppelt als auch ein Anhänger abgekuppelt werden soll. Erreicht wird dies dadurch, dass unterhalb des Kuppelkörpers ein zur geometrischen Achse des Kuppelbolzens koaxial drehbares Rohrstück angeordnet ist, an dessen unterem Ende eine zylindrische Halbschale im Winkel von 90° zur geometrischen Achse des Kuppelbolzens ausgebildet ist, ein in der Halbschale koaxial aufgenommener und koaxial zu dieser drehbarer zylindrischer Teil angeordnet ist, an dessen freiem Umfangsteil ein Block ausgebildet ist, an dessen freier Stirnseite einerseits Stifte für elektrische Verbindungen und andererseits mindestens zwei hohle Führungsbolzen zur pneumatischen und mechanischen Verbindung mit einem vom Anhänger vorstehenden Buchsenteil angeordnet sind und der Buchsenteil unterhalb der Deichsel um zwei zueinander senkrechte Achsen verschwenkbar mit dieser gelenkig verbunden ist und mit Buchsen zur Aufnahme der Stifte und Buchsen zur Aufnahme der Führungsbolzen ausgestattet ist.

Mit Hilfe der vorliegenden Erfindung soll dies auf einfacherem Weg erreicht werden, nämlich dadurch, dass am Kuppelkörper ein zweiarmiger Schwenkteil um eine vertikale Schwenkachse verschwenkbar angeordnet ist, die Schwenkachse mit der geometrischen Achse des Durchgangs und des Kuppelbolzens zusammenfällt und an dem Schwenkteil ein Buchsen-Stecker-Träger angebracht ist, und dass
an der Deichsel ein kreisbogenförmiger Tragteil federnd bewegbar geführt ist, der Kreisbogen zentrisch zur geometrischen Achse der Zugöse ist und am Tragteil ein Stecker-Buchsen-Träger angebracht ist,
wobei der Buchsen-Stecker-Träger und der Stecker-Buchsen-Träger zueinander komplementär wirken, so dass Verbindungen für elektrische und pneumatische Signale hergestellt werden können.

Bei der Kupplungsvorrichtung gemäß der Erfindung kann vom Fahrerhaus des Zugfahrzeuges der An- und Abkupplungsvorgang durchgeführt werden, ohne dass irgendwelche Außenarbeiten erforderlich werden. Erreicht wird dies im Wesentlichen dadurch, dass sowohl an dem Kuppelgehäuse als auch an der Deichsel zusammenwirkende Buchsen-Steckerverbindungen vorgesehen sind, die miteinander elektrisch und pneumatisch verbunden werden können. Da normalerweise nicht davon auszugehen ist, dass das Anhängerfahrzeug in Fahrtrichtung zur Zugmaschine ausgerichtet ist, müssen die entsprechenden Kupplungselemente so angeordnet werden, dass sie Fehlausrichtungen ausgleichen können. Daher sind sowohl der Steckerteil an der Zugmaschine als auch der Buchsenteil am Anhängerfahrzeug bewegbar. Es liegt auf der Hand, dass die Stecker in entsprechender Weise am Anhängerfahrzeug und die Buchsen entsprechend an der Zugmaschine angeordnet werden können.

Die Erfindung wird nachstehend anhand der Zeichnungen beispielsweise erläutert.
- Fig. 1: zeigt eine schaubildliche Darstellung der Teile der Kupplungsvorrichtung gemäß der Erfindung kurz nach einem Kupplungsvorgang, wobei die Zugmaschine und das Anhängerfahrzeug in Fahrtrichtung ausgerichtet sind.
- Fig. 2: zeigt die entsprechenden Teile der Kupplungsvorrichtung gemäß der Erfindung, wenn die Zugmaschine mit ihrer Längsachse nicht zu der des Anhängerfahrzeuges ausgerichtet ist.

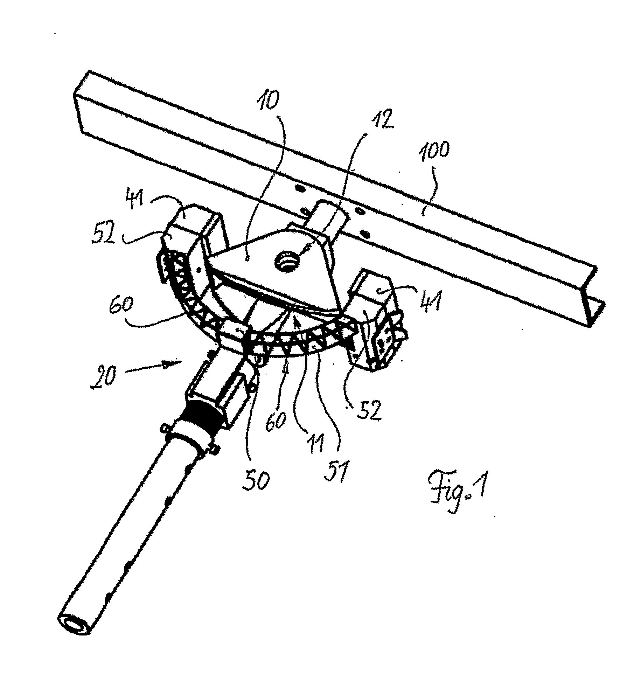

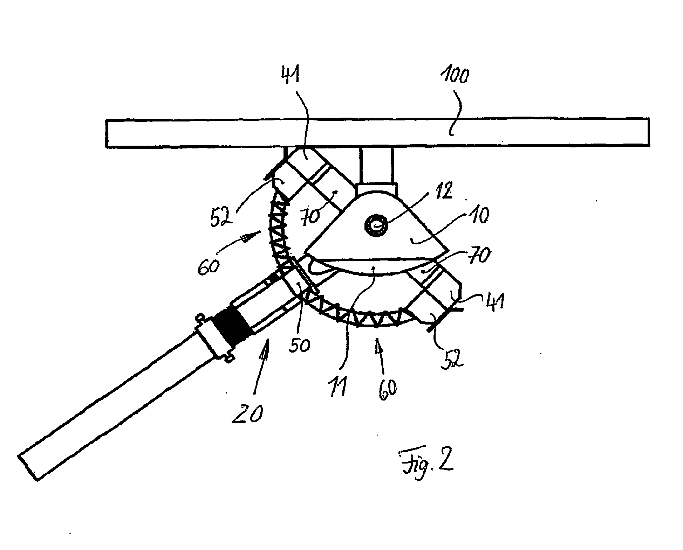

In den Figuren ist mit 10 der Kuppelkörper einer Zugmaschine 100 bezeichnet, der in bekannter Weise mit einer Maulöffnung 11 zur Aufnahme einer Deichsel 20 mit einer Zugöse eines Anhängerfahrzeugs ausgebildet ist. Die idealen Verhältnisse der ausgerichteten Anordnung dieser Teile 10 und 20 zueinander ist in Fig. 1 zu erkennen, wobei davon auszugehen ist, dass dieser Zustand in der Praxis kaum eintritt, weil einerseits die Zugmaschine und das Anhängerfahrzeug nicht in einer gemeinsamen Richtung, in Fahrtrichtung, ausgerichtet sind. Eine Extremlage zeigt Fig. 2. Andererseits ist die Fahrbahn normalerweise nicht eben, so dass z.B. die Zugöse auch aus der horizontalen Ebene heraus verschwenkt sein kann, was aber wegen der Verschwenkbarkeit der Deichsel keine Probleme aufwirft.

Mit 12 ist eine Bohrung zur Aufnahme eines nicht gezeigten Kuppelbolzens bezeichnet, der im gekuppelten Zustand auch durch die Zugöse der Deichsel 20 hindurchgeht.

Unterhalb des Kuppelkörpers 10 ist ein Träger 70 angeordnet, der koaxial zur Achse der Bohrung 12 verschwenkbar ist. An beiden frei vorstehenden Enden des verschwenkbaren Trägers 30 sind kastenförmige Gehäuse 41 bzw. Buchsen-Stecker-Träger angebracht, die demzufolge ebenfalls um die Achse der Bohrung 12 verschwenkbar sind. Diese Kästen enthalten Buchsen und Stecker, um elektrische Verbindungen mit entsprechenden korrespondierenden Teilen herzustellen. Auch enthalten diese Kästen Anschlussmittel, um Druckluftverbindungen herzustellen. Die entsprechenden komplementär ausgebildeten Teile, nämlich Stecker-Buchsen-Träger, befinden sich auf einem Träger 51, der die Form eines Halbkreisbogens mit einem Radius hat, der dem Abstand zwischen der geometrischen Achse der Bohrung 12 und der geometrischen Achse des kreisbogenförmigen Trägers 51 entspricht.

Der kreisbogenförmige Träger 51 ist in einer Führung 50 untergebracht, die- auf der Deichsel 20 befestigt ist. Dies bedeutet, dass der kreisbogenförmige Träger 51 so geführt ist; dass er sich auf einem Kreisbogen bewegen kann, der einen Radius hat, der dem Abstand zur Achse der Bohrung 12 entspricht. Die Führung ist so ausgestaltet, dass der Träger 51 nur in geringer Weise aus dieser Kreisbogenbahn herausgelangen kann, aber immer noch so weit, dass er eine Kupplung des Teils 52 mit dem komplementären Teil 41 zulässt, sofern eine etwa horizontale Ausrichtung gegeben ist. Der Querschnitt des Trägers 51 ist zweckmäßiger Weise rechteckförmig oder quadratisch und so, dass beispielsweise die Spitzen zweier gegenüberliegender Eckpunkte des entsprechenden Vierecks im Wesentlichen vertikal untereinander liegen. Entsprechend sind die Führungsteile in der Führung 50 dimensioniert, also vorzugsweise in der Form von zwei Ösen mit entsprechendem Durchgang und in Ausrichtung zum Kreisbogen des Teils 51.

Zwischen den Teilen 52 und der Führung 50 sind auf dem Träger 51 zwei Spiralfedern 60 aufgelegt. In der in Fig. 1 gezeigten Lage sind die beiden Spiralfedern 60 nahezu entspannt bzw. nehmen den gleichen Spannungszustand ein, während in der nicht ausgerichteten Lage zwischen Zugmaschine und Anhängerfahrzeug, die in Fig. 2 gezeigt ist, die linke Spiralfeder 60 zusammengedrückt ist, während die rechts gezeigte Feder 60 entspannt ist.

Beim Kupplungsvorgang werden diese Spannungszustände der Federn ausgenutzt, so dass selbst im nicht ausgerichteten Zustand von Anhängerfahrzeug und Zugmaschine die entsprechende Kupplung zwischen den Teilen 41 und 52 wechselweise hergestellt werden kann.

Es liegt im Rahmen der vorliegenden Erfindung, lediglich ein Paar von Teilen 41 und 52 mit der Funktion der Herstellung elektrischer und pneumatischer Verbindungen vorzusehen. Das nicht zur Übertragung von Signalen und Druckluft erforderliche Paar dient dann lediglich zur Verbesserung des Einkupplungsvorganges.

Die Federn 60 sind um den Träger 51 derart umgelegt, dass das eine Ende der Feder jeweils an dem Anschlag 50 anschlägt, während das andere Ende an einem der Kupplungsteile 52 anschlägt.

Beim Kupplungsvorgang des Anhängers mit der Zugmaschine findet auch gleichzeitig der Kupplungsvorgang statt, durch den die elektrischen und pneumatischen Verbindungen zwischen Anhängerfahrzeug und Zugmaschine hergestellt werden. In den Figuren sind diese Teile im einzelnen nicht gezeigt, es handelt sich hierbei um zueinander komplementär wirkende Teile, die an der entsprechenden Stelle in dem Buchsenteil 41 und dem zugehörigen Buchsenteil 52 untergebracht sind. Liegt eine Fehlausrichtung vor, d.h. fällt die Fahrzeuglängsachse der Zugmaschine 100 nicht mit der Fahrzeuglängsachse des Anhängerfahrzeugs und auch der Deichsel 20 zusammen, so kann über den beweglich geführten Teil 51 und die Federn 16 dennoch erreicht werden, dass jeweils die richtige Buchse 41 die richtige Buchse 52 findet. Bei diesem Kupplungsvorgang ist es nicht erforderlich, dass der Fahrzeugführer in irgendeiner Weise in diesen Vorgang eingreift, weil in der eingekuppelten Lage der Kuppelbolzen selbsttätig in die Bohrung 12 des Kuppelkörpers eingeführt werden kann, wenngleich die entsprechenden Einrichtungen in den Figuren nicht gezeigt sind.

## Patentansprüche

1. Kupplungsvorrichtung zum Ankuppeln eines Anhängerfahrzeuges an eine Zugmaschine, aufweisend an der Zugmaschine einen Kuppelkörper (10) mit einer Maulöffnung (11) und einem Durchgang (12) für einen pneumatisch betätigbaren Kuppelbolzen und am Anhänger eine Deichsel (20) mit einer Zugöse für die Aufnahme des Kuppelbolzens, **dadurch gekennzeichnet, dass**
unterhalb des Kuppelkörpers (10) ein zweiarmiger Schwenkteil (70) um seine vertikale mittige Schwenkachse verschwenkbar angeordnet ist; die Schwenkachse mit der geometrischen Achse des Durchgangs (12) und der des Kuppelbolzens zusammenfällt und an dem freien Ende mindestens eines Armes des Schwenkteils (70) ein Buchsen-Stecker-Träger (41) angebracht ist, und dass
an der Deichsel (20) zwei beabstandete Halterungsösen oder eine Halterung (50) für einen kreisbogenförmigen Tragteil (51) zwecks geführter Bewegung des Tragteils auf seinem Kreisbogen und in einer im Wesentlichen horizontalen Ebene angebracht sind oder ist; der Kreisbogen zentrisch zur geometrischen Achse der Zugöse ist, an mindestens einem freien Ende des Tragteils (51) ein Stecker-Buchsen-Träger (52) angebracht ist und zwischen dem Stecker-Buchsen-Träger (52) und den Halterungsösen bzw. der Halterung (50) jeweils eine Spiralfeder (60) den Tragteil (51) umgibt,
wobei der Buchsen-Stecker-Träger (41) und der Stecker-Buchsen-Träger (52) auf der gleichen geometrischen Höhe, in gleichem Abstand zur geometrischen Achse des Kuppelbolzens und der Zugöse angeordnet und paarweise zueinander komplementär ausgebildet sind und mit zueinander passenden Buchsen-Stecker-Teilen für elektrische und pneumatische Signale ausgestattet sind.

## Claims

1. Coupling device for connecting a tractor machine to a trailer vehicle, comprising on the tractor machine a coupling body (10) with a jaw opening (11) and a passage (12) for a pneumatically-operated coupling bolt and on the trailer a drawbar (20) with a towing eye for accommodating the coupling bolt, **characterized in that**
a double-armed pivot piece (70) is arranged below the coupling body (10), to pivot about the vertical mid-axis thereof, said axis coinciding with the geometrical axis of the passage (12) and that of the coupling bolt and a jack connector support (41) being arranged on the free end of at least one arm of the pivot piece (70), and that
on the drawbar (20) two separate retainer eyes or a retainer (50) for a circular arc support piece (51) are (is) provided for a guided displacement of the support piece on the arc thereof and are (is) arranged in an essentially horizontal plane, the arc is centrally arranged with relation to the geometrical axis of the towing eye, a counter-jack connector support (52) is arranged on at least one free end of the support piece (51) and between the counter-jack connector support (52) and the retainer eyes or retainer (50) a spiral spring (60) encloses the support piece (51),
wherein the jack connector support (41) and the counter-jack connector support (52) are arranged at the same geometrical height, at the same geometrical distance from the geometrical axis of the coupling bolt and the towing eye and have a complementary paired embodiment with matching plug/socket parts for electrical and pneumatic signals.

## Revendications

1. Dispositif d'accouplement pour accoupler un véhicule remorque à une machine de traction, comprenant, sur la machine de traction, un corps d'accouplement (10) avec une ouverture en forme d'embouchure (11) et une traversée (12) pour un goujon d'accouplement à actionnement pneumatique, et sur la remorque, un timon (20) avec un oeillet de traction pour recevoir le goujon d'accouplement,
**caractérisé en ce que**
au dessous du corps d'accouplement (10) est agencée une partie pivotante à deux bras (70) capable de pivoter autour de son axe de pivotement central vertical ; l'axe de pivotement coïncidant avec l'axe géométrique de la traversée (12) et celui du goujon d'accouplement, et à l'extrémité libre d'au moins un bras de la partie pivotante (70) est monté un support (41) à système femelle/mâle, et **en ce que**
sur le timon (20) sont montés deux oeillets de maintien écartés ou une monture (50) pour une partie portante (51) en forme d'arc de cercle dans le but d'un mouvement guidé de la partie portante sur son arc de cercle et dans un plan sensiblement horizontal ; l'arc de cercle est centré par rapport à l'axe géométrique de l'oeillet de traction, sur au moins une extrémité libre de la partie portante (51) est monté un support (52) à système mâle/femelle, et un ressort spiralé (60) entoure la partie portante (51) entre le support (52) à système mâle/femelle et les oeillets de maintien ou la monture (50) respectivement,
dans lequel le support à système femelle/mâle (41) et le support à système mâle/femelle (52) sont agencés à la même distance de l'axe géométrique du goujon d'accouplement et de l'oeillet de traction, et sont réalisés par paire de façon complémentaire l'un par rapport à l'autre et équipés de parties femelles/mâles mutuellement ajustées pour des signaux électriques et pneumatiques.
